# FASCICULE DE BREVET EUROPEEN

(11) **EP 4 519 127 B1**
(45) Date de publication et mention de la délivrance du brevet: **06.05.2026**
(21) Numéro de dépôt: 23722366.4
(22) Date de dépôt: 26.04.2023
(51) Int. Cl.: B60S 1/56, B60S 1/52, G01S 17/931, G02B 27/00

(54) **DISPOSITIF DE NETTOYAGE D'UNE SURFACE OPTIQUE D'UN CAPTEUR OPTIQUE D'UN VÉHICULE ET SYSTÈME DE DÉTECTION**
VORRICHTUNG ZUM REINIGEN EINER OPTISCHEN OBERFLÄCHE EINES OPTISCHEN SENSORS EINES FAHRZEUGS UND DETEKTIONSSYSTEM
DEVICE FOR CLEANING AN OPTICAL SURFACE OF AN OPTICAL SENSOR OF A VEHICLE, AND DETECTION SYSTEM

(30) Priorité: 03.05.2022 FR 2204187
(43) Date de publication de la demande: 12.03.2025
(73) Titulaire: VALEO SYSTEMES D'ESSUYAGE, 78322 Le Mesnil Saint Denis (FR)
(72) Inventeur: DOLLE, Yoann, 63500 Issoire (FR); TERRASSE, William, 63500 Issoire (FR); COUAVOUX, Aurélien, 63500 Issoire (FR); ROUSSEL, Loic, 63500 Issoire (FR); BARRET, Guillaume, 63500 Issoire (FR); KUCHLY, Nicolas, 63500 Issoire (FR)
(74) Mandataire: Valeo Visibility
(86) Numéro de dépôt international: PCT/EP2023/061051
(87) Numéro de publication internationale: WO 2023/213667

(56) Documents cités:
- US-A1- 2021 146 406
- US-A1- 2022 041 139
- US-A1- 2022 057 509

## Description

### Domaine de l'invention

L'invention concerne un dispositif de nettoyage d'une surface optique d'un capteur optique d'un véhicule et un système de détection comprenant un tel dispositif de nettoyage.

### Etat de la technique

Les véhicules automobiles sont de plus en plus équipés d'éléments optiques, tels que des capteurs optiques de position. Les capteurs optiques de position ont pour fonction de recueillir des informations sur l'environnement du véhicule, afin notamment de fournir au conducteur une aide à la conduite et/ou à la manœuvre de ce véhicule. A cette fin, un capteur optique est couramment installé sur le véhicule de manière à collecter des informations sur l'environnement du véhicule. Ces capteurs optiques sont toutefois particulièrement exposés aux salissures telles qu'eau sale, poussières ou autres types de projections. Or, de telles salissures forment un obstacle à l'émission et à la réception des informations et peuvent perturber le fonctionnement du capteur optique, voire rendre son fonctionnement impossible. US-A-2021/146406 montre un dispositif de nettoyage de l'état de la technique.

Il a été proposé d'utiliser des dispositifs de nettoyage d'une surface optique d'éléments optiques pour les débarrasser de ces salissures. Ces dispositifs de nettoyage sont d'une structure complexe et il peut advenir que le dispositif de nettoyage comporte un défaut de fabrication. Le problème est alors que l'ensemble du dispositif est rejeté.

Il y a un besoin pour un dispositif de nettoyage d'une surface optique d'un élément optique de véhicule qui résout ce problème.

### Exposé de l'invention

Le but de l'invention est de fournir un dispositif de nettoyage d'une surface optique d'un capteur optique d'un véhicule qui évite le rejet de l'ensemble du dispositif si un défaut de fabrication apparaît.

Pour cela l'invention propose un dispositif de nettoyage d'une surface optique d'un capteur optique d'un véhicule, le dispositif comprenant un premier segment avec un premier canal de circulation de fluide de nettoyage et un premier connecteur, un deuxième segment avec un deuxième canal de circulation de fluide de nettoyage et un deuxième connecteur, les premier et deuxième segments comprenant chacun une arrivée de fluide de nettoyage et au moins une buse de diffusion du fluide de nettoyage vers la surface optique, le premier segment et le deuxième segment étant configurés pour être fixés l'un à l'autre de sorte à former un arc de cercle définissant une direction axiale passant par le centre de l'arc de cercle et une direction radiale selon un rayon de l'arc de cercle, le premier connecteur et deuxième connecteur étant de forme complémentaire, et étant configurés pour coopérer de sorte à permettre un blocage des premier et deuxième segments l'un par rapport à l'autre selon la direction axiale et selon la direction radiale.

Selon une variante, les connecteurs de segments fixés entre eux forment un emboîtage élastique amovible.

Selon une variante, les connecteurs comprennent une saillie sur l'un des segments et un alésage dans un autre segment, l'emboitement de la saillie dans l'alésage bloquant en translation les segments l'un par rapport à l'autre en translation selon la direction radiale et une direction tangentielle, qui est orthogonale aux directions radiale et axiales.

Selon une variante, la saillie est emboîtable de manière élastique dans l'alésage, l'emboitement élastique de la saillie avec l'alésage bloquant en translation les segments l'un par rapport à l'autre selon la direction axiale.

Selon une variante, les connecteurs comprennent en outre des plots et/ou des ergots sur au moins l'un des segments coopérant avec l'autre segment et bloquant en rotation les segments l'un par rapport à l'autre autour de la direction axiale.

Selon une variante, les connecteurs comprennent des pattes sur au moins l'un des segments venant en prise avec l'autre segment et bloquant en translation les segments l'un par rapport à l'autre selon la direction axiale.

Selon une variante, les connecteurs comprennent en outre des ergots sur au moins l'un des segments en prise avec l'autre segment et bloquant en rotation les segments l'un par rapport à l'autre autour de la direction axiale, et/ou un téton sur au moins l'un des segments et un orifice dans l'autre segment, l'emboitement du téton dans l'orifice et l'emboitement élastique de la saillie avec l'alésage bloquant en rotation les segments l'un par rapport à l'autre autour de la direction axiale.

Selon une variante, le connecteur de l'un des segments comprend une languette s'emboîtant dans un logement de l'autre connecteur de l'autre segment, l'emboîtement élastique de la languette dans le logement bloquant en translation les segments l'un par rapport à l'autre selon les directions tangentielle, radiale et axiale et autour de la direction axiale.

Selon une variante, le dispositif comprend un passage d'un organe de fixation du dispositif de nettoyage à un support de capteur, le passage étant au travers des connecteurs.

Selon une variante, les segments forment une structure annulaire, la structure ayant deux segments fixés entre eux deux à deux, de préférence ayant trois segments fixés entre eux deux à deux, de préférence ayant quatre segments fixés entre eux deux à deux.

Selon une variante, au moins certains des segments sont des modules identiques.

L'invention se rapporte aussi à un système de détection comprenant un capteur optique d'un véhicule et un dispositif de nettoyage tel que décrit précédemment, le dispositif étant configuré pour nettoyer la surface optique du capteur optique.

Selon une variante, le capteur optique comporte une surface optique cylindrique, les segments formant une structure annulaire sur au moins une partie de la circonférence de la surface optique.

L'ensemble des modes de réalisation préférés ainsi que l'ensemble des avantages du dispositif de nettoyage selon l'invention se transposent mutatis mutandis au présent système de détection. Les différents modes de réalisation peuvent être pris en combinaison ou considérés isolément.

### Brève description des figures

D'autres caractéristiques et avantages de la présente invention apparaîtront à la lecture de la description détaillée qui suit pour la compréhension de laquelle on se reportera aux figures annexées qui montrent :
- La figure 1 est une vue d'un dispositif de nettoyage ;
- La figure 2 est une vue d'un segment du dispositif de la figure 1 ;
- La figure 3 est une vue d'un exemple de connecteurs ;
- La figure 4 est une vue d'un exemple de connecteurs ;
- La figure 5 est une vue d'un exemple de connecteurs ;
- La figure 6 est une vue d'un exemple de connecteurs ;
- La figure 7 est une vue d'un exemple de connecteurs.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation de l'invention

L'invention propose un dispositif de nettoyage d'une surface optique d'un capteur optique d'un véhicule. Le dispositif comprend un premier segment avec un premier canal de circulation de fluide de nettoyage et un premier connecteur. Le dispositif comprend aussi un deuxième avec un deuxième canal de circulation de fluide de nettoyage et un deuxième connecteur. Les premier et deuxième segments comprennent chacun une arrivée de fluide de nettoyage et au moins une buse de diffusion du fluide de nettoyage vers la surface optique. Le premier segment et le deuxième segment sont configurés pour être fixés l'un à l'autre de sorte à former un arc de cercle. En outre, le premier connecteur et le deuxième connecteur sont de forme complémentaire, et sont configurés pour coopérer de sorte à permettre un blocage des premier et deuxième segments l'un par rapport à l'autre selon une direction axiale et selon une direction radiale. Ainsi, le dispositif de nettoyage est formé de plusieurs segments fixés ensemble. Ceci permet de rejeter un segment indépendamment d'un autre si un défaut apparaît sur l'un des segments. Il n'est alors pas nécessaire de rejeter l'ensemble du dispositif si un segment est défectueux.

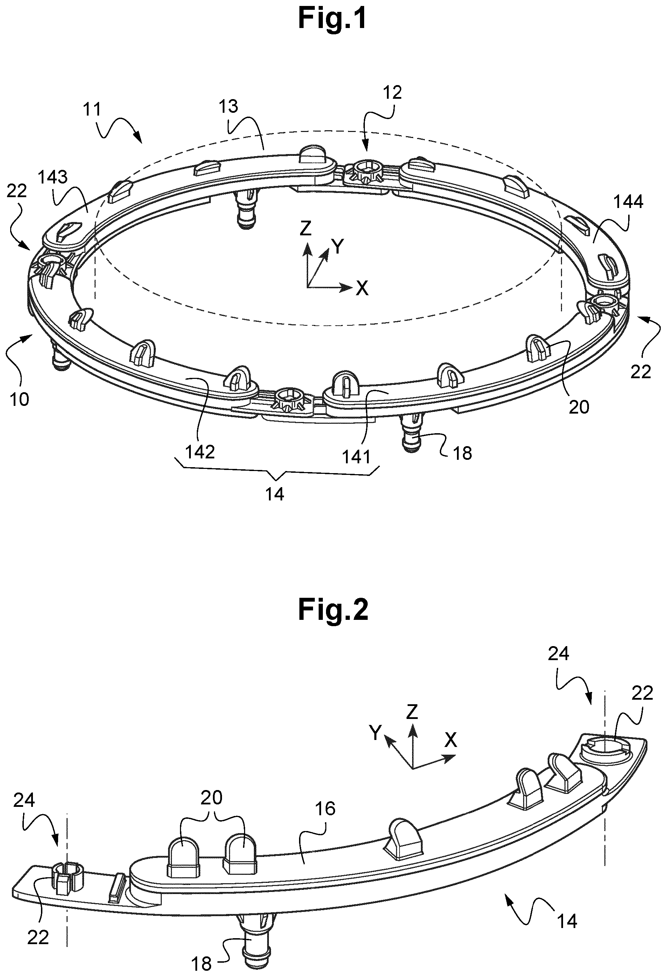

La figure 1 montre un dispositif 10 de nettoyage. Le dispositif 10 de nettoyage peut notamment être utilisé dans un système 11 de détection d'un véhicule comprenant un capteur optique 12. Le capteur optique 12 permet de recueillir des informations sur la position et l'environnement du véhicule automobile, afin notamment de fournir au conducteur une aide à la conduite et/ou à la manœuvre de ce véhicule. Le capteur optique 12 est installé sur le véhicule de manière à collecter des informations sur l'environnement frontal, arrière et/ou latéral du véhicule : le capteur optique 12 est par exemple installé en face avant et/ou en face arrière. Le capteur optique 12 est par exemple un LIDAR, acronyme de « light detection and ranging » ou de « laser imaging, detection, and ranging ».

Le capteur 12 est en interaction avec l'environnement au travers d'une surface optique 13. Il peut s'agir d'une surface de protection entre l'élément optique et l'environnement. Par exemple, il peut s'agir de la surface d'une vitre rapportée entre le capteur et l'environnement, ou une surface d'un boîtier enfermant un capteur (telle qu'une face d'un boîtier LIDAR). La surface peut être opaque (dans les longueurs d'onde du visible). La surface peut être transparente aux longueurs d'onde d'émission et réception du capteur 12. Également, on peut envisager plusieurs capteurs en interaction avec l'environnement au travers d'une seule surface optique.

La forme de la surface optique 13 peut varier selon l'emplacement et l'utilité du capteur 12 dans le véhicule et en fonction de l'encombrement autour du capteur. La surface optique 13 peut comporter des portions arrondies et d'autres rectilignes. Selon la figure 1, la surface optique 13 a une forme cylindrique.

Le dispositif 10 comprend une pluralité de segments 14, à savoir au moins deux segments 141, 142. Selon la figure 1, le dispositif comprend à titre d'exemple quatre segments 141, 142, 143, 144 ; il est envisageable que le dispositif 10 comprennent un autre nombre de segments. Les segments 14 sont configurés pour être fixés deux à deux. Par exemple, le premier segment 141 et le deuxième segment 142 sont configurés pour être fixés l'un à l'autre.

Les segments peuvent être identiques entre eux ou présenter des différences de forme. La forme des segments s'adapte donc à la forme et à l'environnement de la surface optique 13. Les segments 14 forment des modules ; les segments 14 sont des modules indépendants les uns des autres. Dans le dispositif 10, au moins certains des segments sont des modules identiques ; ceci permet d'assembler le dispositif de manière simple mais aussi de remplacer des segments défectueux de manière simple. Cela facilite la fabrication du dispositif. Selon la figure 1, tous les segments sont des modules identiques.

Les segments 14 ont une forme allongée entre deux extrémités. Le premier segment 141 et le deuxième segment 142 sont configurés pour être fixés l'un à l'autre de sorte à former un arc de cercle. Un arc de cercle est une portion de courbe délimitée par deux points de cette courbe ; un arc de cercle est une portion de la circonférence d'un cercle avec un centre et un rayon. L'arc de cercle définit une direction axiale Z qui passe par le centre de l'arc de cercle, une direction radiale Y qui est selon un rayon de l'arc de cercle et une direction tangentielle X qui est tangentielle à la portion de cercle de l'arc de cercle. L'arc de cercle peut s'étendre dans un plan, un espace à deux dimensions, mais peut aussi présenter une conformation telle que l'arc de cercle soit partiellement dans un plan et s'étende en trois dimensions. La forme spécifique de chaque segment 14 dépend de la forme de la surface optique 13. Au moins certains des segments sont en arc de cercle, tels que le premier segment 141 et le deuxième segment 142. Ceci permet de contourner au moins partiellement la surface optique 13.

La figure 2 montre un exemple de segment 14. Le segment 14 est en forme d'arc de cercle, tel que défini ci-dessus. Comme mentionné, l'arc de cercle formé par les segments 141 et 142 pouvant s'étendre en trois dimensions, un segment 14 peut comporter une pente entre ses extrémités. En vue de dessus, le segment 14 demeure un arc de cercle. La forme du segment dépend aussi de l'environnement de la surface optique 13 et s'adapte à l'encombrement autour de la surface optique 13. Les segments 14 peuvent comporter une forme d'arc de cercle qui diffère d'un segment à l'autre. Ceci permet de s'adapter à la forme et à l'environnement de la surface optique 13.

Certains segments 14 peuvent présenter une forme en arc de cercle et certains segments peuvent présenter une forme rectiligne ou bien une forme quelconque. La forme du dispositif est telle que les segments font face à la surface optique 13. La surface optique 13 est au moins partiellement entourée par le dispositif 10 (au moins dans les portions à travers lesquelles le ou les capteurs 12 sont en interaction avec l'environnement). Le dispositif 10 peut présenter une forme fermée (telle que sur la figure 1) ou ouverte. Le dispositif 10 peut présenter une forme globalement circulaire avec les directions X, Y, Z définie ci-dessus. On peut envisager selon la figure 1 que les segments 14 forment une structure annulaire. La structure annulaire (de 360°) peut avoir deux segments fixés entre eux deux à deux (chaque segment représentant 180°), ou trois segments fixés entre eux deux à deux (chaque segment représentant 120°), ou quatre segments fixés entre eux deux à deux (chaque segment représentant 90°). Selon la figure 1, les segments 14 forment un cercle autour de la surface optique 13 qui a une forme cylindrique. Les directions X et Y sont dans le même plan (celui du dispositif 10) avec la direction tangentielle X s'étendant tangentiellement au cercle et la direction radiale Y s'étendant radialement vers le centre du cercle ; la direction axiale Z est orthogonale aux directions X et Y, par le centre du cercle. La direction Z peut s'étendre selon la hauteur de la surface optique 13.

Les segments 14 comportent chacun un canal 16 de circulation de fluide de nettoyage. Le canal 16 des segments est un conduit d'écoulement de forme creuse et allongée, permettant le passage du fluide pour le nettoyage de la surface optique 13. Le canal 16 suit la forme du segment 14, à savoir un arc de cercle tel que décrit précédemment. Selon la figure 2, le premier segment 141 représenté comprend un premier canal 16 de circulation et le deuxième segment 142 comportant un deuxième canal 16 de circulation. Il en va de même pour tout autre segment 14 supplémentaire. Chaque canal 16 s'étend sur au moins une partie de la longueur du segment 14 respectif, mais sans s'étendre d'un segment à un autre ; un canal 16 définit un conduit d'écoulement propre à chaque segment 14. Les canaux 16 étant indépendants les uns des autres, le dispositif peut présenter une forme ouverte, telle qu'une boucle ouverte.

En outre, les segments 14 comprennent chacun une arrivée 18 de fluide de nettoyage et au moins une buse 20 de diffusion du fluide de nettoyage vers la surface optique 13. L'arrivée 18 est reliée à un réseau de distribution de fluide de nettoyage et permet l'alimentation du canal 16 en fluide de nettoyage. Chaque segment 14 comprend donc sa propre arrivée 18 de fluide ; les segments 14 sont alors alimentés chacun de manière indépendante en fluide. L'arrivée 18 peut s'étendre selon l'axe Z, mais on peut envisager une autre forme, telle que coudée, pour s'adapter à l'environnement du capteur. Le canal 16 de chaque segment 14 permet ensuite la distribution de fluide de nettoyage vers la ou les buses 20 de diffusion du fluide. Cinq buses 20 sont représentées à titre d'exemple sur le segment 14 de la figure 2 ; à titre d'exemple encore, les segments 14 de la figure 1 comportent quatre buses 20 chacun. Les segments comportent leur propre nombre de buses 20, en fonction de l'emplacement des segments 14 par rapport à la surface optique 13 et par rapport à la portion de surface optique 13 à nettoyer. De même, les buses 20 sont réparties sur chaque segment 14 en fonction de la portion de surface optique 13 à nettoyer.

Les segments 14 comportent aussi un connecteur 22. Le premier segment 141 comportent un premier connecteur 22 et le deuxième connecteur 142 comporte un deuxième connecteur 22. Il en va de même pour tout segment 14 supplémentaire. Les segments 14 sont configurés pour être fixés deux à deux, et selon les segments 14, pour former un arc de cercle. Les segments 14 sont fixés entre eux par leur connecteur 22 respectif. Le premier connecteur 22 et le deuxième connecteur 22 sont de forme complémentaire et sont configurés pour coopérer de sorte à permettre un blocage des premier et deuxième segments 141, 142 l'un par rapport à l'autre, selon la direction axiale Z et la direction radiale Y. Ainsi, les segments 141 et 142 sont fixés l'un à l'autre pour former le dispositif 10. La coopération des connecteurs 22 permet d'immobiliser un segment par rapport à l'autre de sorte à constituer le dispositif 10. Le blocage des segments 14 permet de conférer un caractère monobloc au dispositif 10 de sorte à pouvoir en assurer ultérieurement l'assemblage en position dans le véhicule. Le dispositif comprend donc des segments modulaires avec chacun un connecteur dont la coopération assure le caractère monobloc et l'assemblage aisé autour de la surface optique 13. En outre, les segments 14 sont des éléments modulaires que l'on peut remplacer si un défaut apparaît - notamment lors de l'assemblage des segments entre eux. Ceci permet de corriger le dispositif 10 au moment de l'assemblage sans toutefois jeter le dispositif 10 en entier au rebut ; il suffit de remplacer le ou les segments défectueux.

Le dispositif 10 peut comporter un nombre de segments dépendant de la surface optique 13 à nettoyer. Les segments 14 peuvent alors comprendre deux connecteurs 22, un connecteur 22 à chaque extrémité des segments 14. Ceci permet d'assembler un segment 14 à deux autres segments 14 voisins. Selon la figure 1, chaque segment 14 est assemblé par ses deux connecteurs 22 à deux segments 14 voisins. Le dispositif 10 peut ainsi former une boucle fermée. Toutefois, le dispositif 10 peut être une boucle ouverte, le connecteur 22 d'un segment 14 d'extrémité n'étant pas assemblé à un segment voisin.

Les connecteurs 22 peuvent permettre un emboîtage de deux segments 14 voisins de façon amovible. Ceci permet de réparer le dispositif 10 après son assemblage, lors de son utilisation - et ce, sans jeter tout le dispositif 10 au rebut. Un segment défectueux peut être remplacé. Les connecteurs 22 peuvent permettre un emboîtage élastique de deux segments 14 voisins. En d'autres termes, les connecteur 22 forment un clips. Ceci permet une assemblage aisé des connecteurs 22 entre eux et un blocage des segments de manière amovible.

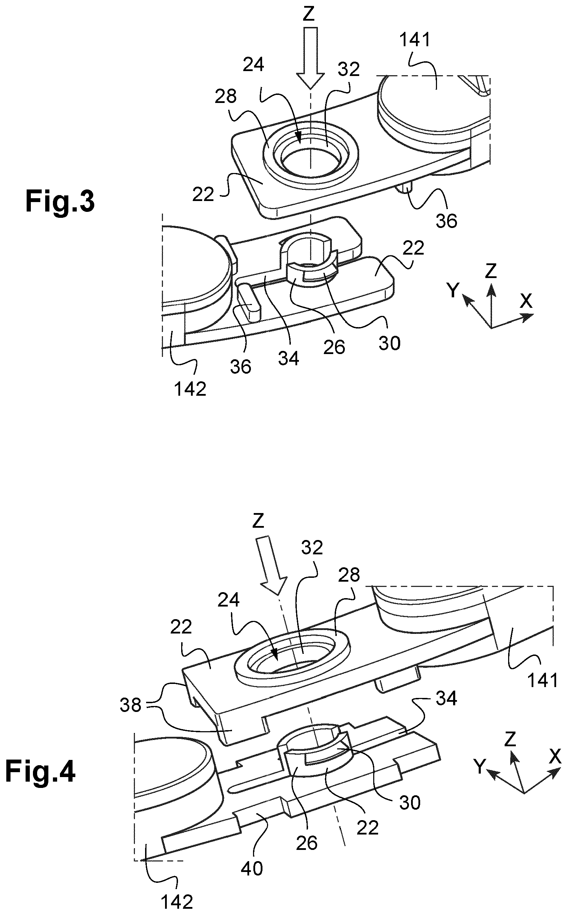

Les figures 3-7 montrent des exemples de connecteurs 22. Les connecteurs 22 ont des formes complémentaires permettant la fixation d'un segment à un autre.

Les figures 3 à 6 montrent les connecteurs 22 comprenant une saillie 26 sur l'un des segments et un alésage 28 dans un autre canal. L'emboitement de la saillie 26 dans l'alésage 28 bloque en translation les segments 141, 142 l'un par rapport à l'autre en translation selon la direction radiale Y et la direction tangentielle X. Les premier et deuxième connecteurs 22 coopèrent de sorte à permettre un blocage des segments 141, 142 l'un par rapport à l'autre dans un plan contenant X et Y. L'emboîtement des connecteurs 22 l'un dans l'autre est selon la direction Z.

Selon les figures 3 et 4, la saillie 26 est emboîtable de manière élastique dans l'alésage 28, l'emboitement élastique de la saillie 26 avec l'alésage 28 bloquant en translation les segments 141, 142 l'un par rapport à l'autre selon la direction axiale Z. Ainsi les premier et deuxième connecteurs 22 coopèrent de sorte à permettre un blocage des segments 141, 142 l'un par rapport à l'autre dans les trois directions X, Y, Z. L'emboîtement élastique est obtenu par des épaulements 30 sur le connecteur 22 de l'un des segments 14 (le segment 142 sur les figures 3 et 4) venant en prise avec une réduction de diamètre 32 sur l'autre des segments 14 (le segment 141 sur les figures 3 et 4). Les épaulements 30 et réduction de diamètre 32 forment un clips, assurant un emboîtement aisé. Une fois les épaulements 30 en prise avec la réduction de diamètre 32, les segments sont solidarisés. Par ailleurs, une fente 34 dans l'un des segments 14 (le segment 142 sur les figures 3 et 4) permet de rendre amovible l'emboîtement des connecteurs 22. Une pression selon la direction Y du connecteur 22 à l'encontre de la fente 34 permet de retirer les connecteurs 22 l'un de l'autre. Ceci permet de démonter les deux segments 141, 142 et d'en remplacer un si nécessaire.

Selon les figures 3 et 4, les connecteurs 22 comprennent en outre des plots 36 et/ou des ergots 38 sur au moins l'un des segments 14 coopérant avec l'autre segment et bloquant en rotation les segments 14 l'un par rapport à l'autre autour de la direction axiale Z. Ceci donne un caractère monobloc au dispositif 10 évitant la déformation durant le montage du dispositif dans le véhicule et durant le cycle de vie du dispositif 10.

Plus spécifiquement, la figure 3 présente des plots 36 sur le connecteur 22 de chacun des segments 141, 142. Les plots 36 sur un segment 14 viennent en butée contre l'extrémité de l'autre segment 14. La butée de l'extrémité d'un segment 14 contre les plots 36 bloque le mouvement de rotation des segments l'un par rapport à l'autre autour de la direction Z. Par exemple, les connecteurs 22 de chacun des segments 141, 142 comportent deux plots 36 sur une face tournée vers l'autre segment. Les deux plots 36 sur un des connecteurs 22 viennent en butée contre l'extrémité de l'autre segment 14 et bloquent le mouvement de rotation des segments l'un par rapport à l'autre autour de la direction Z.

La figure 4 présente des ergots 38 sur au moins l'un des connecteurs 22. Les ergots 38 sur un segment 14 viennent en prise avec le connecteur 22 de l'autre segment. L'autre segment peut comporter des encoches 40 par lesquelles les ergots 38 viennent en prise. La prise des ergot 38 avec l'autre segment bloque le mouvement de rotation des segments l'un par rapport à l'autre autour de la direction Z. Par exemple, le connecteur 22 du segment 141 comporte quatre ergots 38 autour de l'alésage 28 sur une face tournée vers l'autre segment 142. Les quatre ergots 38 viennent en prise avec les encoches 40 correspondantes de l'autre segment 142 et bloquent le mouvement de rotation des segments l'un par rapport à l'autre autour de la direction Z.

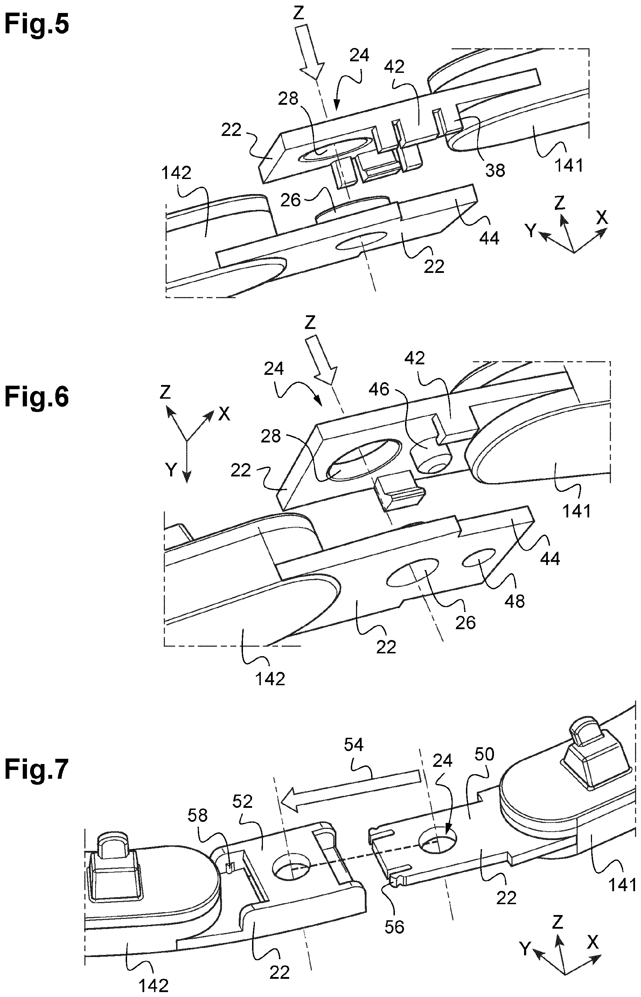

Selon les figures 5 et 6, la saillie 26 (essentiellement masquée derrière le connecteur 22 sur la figure 6) est emboîtable dans l'alésage 28, l'emboitement de la saillie 26 avec l'alésage 28 bloquant en translation les segments 141, 142 l'un par rapport à l'autre selon les directions X et Y. En outre, la coopération entre les connecteurs 22 est élastique, les connecteurs 22 pouvant comprendre des pattes 42 sur au moins l'un des segments 14 (le segment 141 sur les figures 5 et 6) venant en prise avec l'autre segment 14 (le segment 142 sur les figures 5 et 6) et bloquant en translation les segments l'un par rapport à l'autre selon la direction axiale Z. Ainsi les premier et deuxième connecteurs 22 coopèrent de sorte à permettre un blocage des segments 141, 142 l'un par rapport à l'autre dans les trois directions X, Y, Z. Les pattes 42 forment un clips, assurant un emboîtement aisé. Également, les pattes 42 permettent de rendre amovible l'emboîtement des connecteurs 22. Une fois les pattes 42 en prise avec l'autre segment, les segments sont solidarisés, de manière amovible. Un écartement selon la direction Y des pattes 42 permet de retirer les connecteurs 22 l'un de l'autre. Ceci permet de démonter les deux segments 141, 142 et d'en remplacer un si nécessaire. Par ailleurs, l'autre segment peut comporter une échancrure 44 (le segment 142 sur les figures 5 et 6) dans laquelle les pattes 42 peuvent venir en prise.

Plus spécifiquement, la figure 5 présente des ergots 38 sur au moins l'un des connecteurs 22. Les ergots 38 sur un segment 14 sont en prise avec l'autre segment. Les ergots 38 peuvent venir en prise dans l'échancrure 40 de l'autre segment. La prise des ergot 38 avec l'autre segment bloque le mouvement de rotation des segments l'un par rapport à l'autre autour de la direction axiale Z. Par exemple, le connecteur 22 du segment 141 comporte quatre ergots 38, deux par deux de part et d'autre des pattes 42 sur une face tournée vers l'autre segment 142. Les quatre ergots 38 viennent en prise dans l'échancrure 40 correspondante de l'autre segment 142 et bloquent le mouvement de rotation des segments l'un par rapport à l'autre autour de la direction axiale Z. Les ergots 38 donnent un caractère monobloc au dispositif 10 évitant la déformation durant le montage du dispositif dans le véhicule et durant le cycle de vie du dispositif 10.

La figure 6 présente un téton 46 sur au moins l'un des segments 14 (par exemple le segment 141 sur la figure 6) et un orifice 48 dans l'autre segment 14 (par exemple le segment 141 sur la figure 6). L'emboitement du téton 46 dans l'orifice 48 et l'emboitement élastique de la saillie 26 avec l'alésage 28 bloquent en rotation les segments l'un par rapport à l'autre autour de la direction axiale Z. Ceci donne un caractère monobloc au dispositif 10 évitant la déformation durant le montage du dispositif dans le véhicule et durant le cycle de vie du dispositif 10.

Selon la figure 7, le connecteur 22 de l'un des segments 14 (par exemple, le segment 141 selon la figure 7) comprend une languette 50. L'autre segment 14 (par exemple, le segment 142 selon la figure 7) comprend un logement 52. La languette 50 peut s'emboîter dans le logement 52, l'emboîtement élastique de la languette 50 dans le logement 52 bloquant en translation les segments l'un par rapport à l'autre selon les directions tangentielle X, radiale Y et axiale Z et autour de la direction axiale Z. Ceci donne un caractère monobloc au dispositif 10 évitant la déformation durant le montage du dispositif dans le véhicule et durant le cycle de vie du dispositif 10. Ainsi, les premier et deuxième connecteurs 22 coopèrent de sorte à permettre un blocage des segments 141, 142 l'un par rapport à l'autre selon les directions tangentielle X, radiale Y et axiale Z et autour de la direction axiale Z. L'emboîtement des connecteurs 22 l'un dans l'autre est selon la direction X marquée par la flèche 54.

Pour assurer le blocage en translation des deux segments 141 et 142 l'un par rapport à l'autre une fois la languette 50 emboîtée dans le logement 52, le connecteur 22 pourvu de la languette 50 peut comprendre des pinces 56 avec une fente coopérant chacune avec une nervure 58 de l'autre connecteur 22. Ceci permet l'emboîtage élastique de manière amovible des connecteurs 22. Une pression selon la direction Y des pinces 56 à l'encontre de la fente permet de retirer les connecteurs 22 l'un de l'autre. Ceci permet de démonter les deux segments 141, 142 et d'en remplacer un si nécessaire.

Les segments 14 peuvent comprendre un passage 24 d'un organe de fixation du dispositif 10 de nettoyage à un support de capteur 12, le passage 24 étant au travers des connecteurs 22. Le passage 24 au travers d'un connecteur 22 respectif est une interface de fixation du dispositif 10 au support ; il n'est pas nécessaire de prévoir d'autres moyens de fixation tels que des pattes de fixation, ce qui simplifie le dispositif 10. En outre, l'organe de fixation du dispositif 10 s'étendant au travers des connecteurs 22 permet de renforcer le blocage des segments les uns par rapport aux autres et évite le risque de désolidarisation des segments 14 en cours d'utilisation en raison de vibrations dans le véhicule. Selon les figure 3 à 6, le passage 24 est au travers de la saillie 26 et de l'alésage 28 ; une fois la saillie 26 emboîtée dans l'alésage, le passage 24 de chaque connecteur 22 est coaxial avec le passage 24 de l'autre connecteur. Selon la figure 7, le passage 24 est au travers de la languette 50 et du logement 52 ; une fois la languette 50 emboîtée dans le logement 52, le passage 24 de chaque connecteur 22 est coaxial avec le passage 24 de l'autre connecteur. Ceci permet l'insertion d'un organe de fixation du dispositif 10 à l'environnement du capteur 12. L'organe de fixation est par exemple une vis ou un plot formant clips.

L'invention se rapporte aussi au système 11 de détection visible sur la figure 1, comprenant le capteur optique 12 d'un véhicule et le dispositif 10 de nettoyage. Le dispositif 10 est configuré pour nettoyer la surface optique 13 du capteur optique. Selon une mode de réalisation, la surface optique 13 du capteur optique 12 est cylindrique, les segments 14 formant une structure annulaire sur au moins une partie de la circonférence de la surface optique. Les avantages décrits du dispositif 10 s'appliquent au système 11.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limitée aux exemples illustrés et/ou décrits ci-dessus.

## Revendications

1. Dispositif (10) de nettoyage d'une surface optique (13) d'un capteur optique (12) d'un véhicule, le dispositif comprenant
- un premier segment (14) avec un premier canal (16) de circulation de fluide de nettoyage et un premier connecteur (22),
- un deuxième segment (14) avec un deuxième canal (16) de circulation de fluide de nettoyage et un deuxième connecteur (22),
- les premier et deuxième segments (14) comprenant chacun une arrivée (18) de fluide de nettoyage et au moins une buse (20) de diffusion du fluide de nettoyage vers la surface optique,
- le premier segment et le deuxième segment (14) étant configurés pour être fixés l'un à l'autre de sorte à former un arc de cercle définissant une direction axiale (Z) passant par le centre de l'arc de cercle et une direction radiale (Y) selon un rayon de l'arc de cercle, **caractérisé en ce que**
- le premier connecteur (22) et deuxième connecteur (22) sont de forme complémentaire, et sont configurés pour coopérer de sorte à permettre un blocage des premier et deuxième segments l'un par rapport à l'autre selon la direction axiale (Z) et selon la direction radiale (Y).

2. Dispositif (10) selon la revendication précédente, dans lequel les connecteurs (22) de segments fixés entre eux forment un emboîtage élastique amovible.

3. Dispositif (10) selon l'une des revendications 1 ou 2, dans lequel les connecteurs (22) comprennent une saillie (26) sur l'un des segments et un alésage (28) dans un autre segment, l'emboitement de la saillie (26) dans l'alésage (28) bloquant en translation les segments l'un par rapport à l'autre en translation selon la direction radiale (Y) et une direction tangentielle (X), qui est orthogonale aux directions radiale (Y) et axiales (Z).

4. Dispositif (10) selon la revendication 3, dans lequel la saillie (26) est emboîtable de manière élastique dans l'alésage (28), l'emboitement élastique de la saillie (26) avec l'alésage (28) bloquant en translation les segments l'un par rapport à l'autre selon la direction axiale (Z).

5. Dispositif (10) selon les revendications 3 ou 4, dans lequel les connecteurs comprennent en outre des plots (36) et/ou des ergots (38) sur au moins l'un des segments (14) coopérant avec l'autre segment et bloquant en rotation les segments l'un par rapport à l'autre autour de la direction axiale (Z).

6. Dispositif (10) selon la revendication 3, dans lequel les connecteurs (22) comprennent des pattes (42) sur au moins l'un des segments venant en prise avec l'autre segment et bloquant en translation les segments (14) l'un par rapport à l'autre selon la direction axiale (Z).

7. Dispositif (10) selon la revendication 6, dans lequel les connecteurs comprennent en outre
- Des ergots (38) sur au moins l'un des segments en prise avec l'autre segment et bloquant en rotation les segments l'un par rapport à l'autre autour de la direction axiale (Z), et/ou
- Un téton (46) sur au moins l'un des segments et un orifice (48) dans l'autre segment, l'emboitement du téton dans l'orifice et l'emboitement élastique de la saillie (26) avec l'alésage (28) bloquant en rotation les segments l'un par rapport à l'autre autour de la direction axiale (Z).

8. Dispositif (10) selon l'une des revendication 1 ou 2, dans lequel le connecteur (22) de l'un des segments (14) comprend une languette (50) s'emboîtant dans un logement (52) de l'autre connecteur (22) de l'autre segment (14), l'emboîtement élastique de la languette (50) dans le logement (52) bloquant en translation les segments l'un par rapport à l'autre selon les directions tangentielle (X), radiale (Y) et axiale (Z) et autour de la direction axiale (Z).

9. Dispositif (10) selon l'une des revendications précédentes, comprenant un passage (24) d'un organe de fixation du dispositif (10) de nettoyage à un support de capteur (12), le passage (24) étant au travers des connecteurs (22).

10. Dispositif (10) selon l'une des revendications précédentes, dans lequel les segments (14) forment une structure annulaire, la structure ayant deux segments fixés entre eux deux à deux, de préférence ayant trois segments fixés entre eux deux à deux, de préférence ayant quatre segments fixés entre eux deux à deux.

11. Dispositif (10) selon l'une des revendications précédentes, dans lequel au moins certains des segments (14) sont des modules identiques.

12. Système (11) de détection comprenant un capteur optique (12) d'un véhicule et un dispositif de nettoyage (10) selon l'une des revendications précédentes, le dispositif étant configuré pour nettoyer la surface optique (13) du capteur optique.

13. Système (11) selon la revendication précédente, dans lequel le capteur optique (12) comporte une surface optique (13) cylindrique, les segments (14) formant une structure annulaire sur au moins une partie de la circonférence de la surface optique.

## Patentansprüche

1. Vorrichtung (10) zur Reinigung einer optischen Oberfläche (13) eines optischen Sensors (12) eines Fahrzeugs, wobei die Vorrichtung umfasst:
- ein erstes Segment (14) mit einem ersten Kanal (16) für die Zirkulation von Reinigungsflüssigkeit und einem ersten Verbinder (22),
- ein zweites Segment (14) mit einem zweiten Kanal (16) für die Zirkulation von Reinigungsflüssigkeit und einem zweiten Verbinder (22),
- wobei das erste und zweite Segment (14) jeweils einen Einlass (18) für Reinigungsflüssigkeit und mindestens eine Düse (20) zur Verteilung der Reinigungsflüssigkeit auf die optische Oberfläche umfassen,
- wobei das erste Segment und das zweite Segment (14) so konfiguriert sind, dass sie aneinander befestigt werden können, um einen Kreisbogen zu bilden, der eine axiale Richtung (Z) definiert, die durch das Zentrum des Kreisbogens verläuft, und eine radiale Richtung (Y) entlang eines Radius des Kreisbogens, **dadurch gekennzeichnet, dass**
- der erste Verbinder (22) und der zweite Verbinder (22) komplementär geformt sind und so konfiguriert sind, dass sie zusammenwirken, um eine Blockierung des ersten und zweiten Segments zueinander in axialer Richtung (Z) und in radialer Richtung (Y) zu ermöglichen.

2. Vorrichtung (10) nach dem vorhergehenden Anspruch, wobei die Verbinder (22) von aneinander befestigten Segmenten eine abnehmbare elastische Steckverbindung bilden.

3. Vorrichtung (10) nach einem der Ansprüche 1 oder 2, wobei die Verbinder (22) einen Vorsprung (26) an einem der Segmente und eine Bohrung (28) in einem anderen Segment umfassen, wobei das Einstecken des Vorsprungs (26) in die Bohrung (28) die Segmente in Bezug aufeinander in Translation in radialer Richtung (Y) und in tangentialer Richtung (X), die orthogonal zu den radialen (Y) und axialen (Z) Richtungen ist, blockiert.

4. Vorrichtung (10) nach Anspruch 3, wobei der Vorsprung (26) elastisch in die Bohrung (28) einsteckbar ist, wobei das elastische Einstecken des Vorsprungs (26) in die Bohrung (28) die Segmente in Bezug aufeinander in Translation in axialer Richtung (Z) blockiert.

5. Vorrichtung (10) nach den Ansprüchen 3 oder 4, wobei die Verbinder ferner Stifte (36) und/oder Zapfen (38) an mindestens einem der Segmente (14) umfassen, die mit dem anderen Segment zusammenwirken und die Segmente in Bezug aufeinander in Rotation um die axiale Richtung (Z) blockieren.

6. Vorrichtung (10) nach Anspruch 3, wobei die Verbinder (22) Laschen (42) an mindestens einem der Segmente umfassen, die mit dem anderen Segment in Eingriff kommen und die Segmente (14) in Bezug aufeinander in Translation in axialer Richtung (Z) blockieren.

7. Vorrichtung (10) nach Anspruch 6, wobei die Verbinder ferner umfassen:
- Zapfen (38) an mindestens einem der Segmente, die mit dem anderen Segment in Eingriff sind und die Segmente in Bezug aufeinander in Rotation um die axiale Richtung (Z) blockieren, und/oder
- einen Zapfen (46) an mindestens einem der Segmente und eine Öffnung (48) im anderen Segment, wobei das Einstecken des Zapfens in die Öffnung und das elastische Einstecken des Vorsprungs (26) in die Bohrung (28) die Segmente in Bezug aufeinander in Rotation um die axiale Richtung (Z) blockieren.

8. Vorrichtung (10) nach einem der Ansprüche 1 oder 2, wobei der Verbinder (22) eines der Segmente (14) eine Lasche (50) umfasst, die in ein Gehäuse (52) des anderen Verbinders (22) des anderen Segments (14) eingesteckt wird, wobei das elastische Einstecken der Lasche (50) in das Gehäuse (52) die Segmente in Bezug aufeinander in Translation in tangentialer (X), radialer (Y) und axialer (Z) Richtung und um die axiale Richtung (Z) blockiert.

9. Vorrichtung (10) nach einem der vorhergehenden Ansprüche, umfassend einen Durchgang (24) für ein Befestigungselement der Reinigungsvorrichtung (10) an einem Sensorträger (12), wobei der Durchgang (24) durch die Verbinder (22) verläuft.

10. Vorrichtung (10) nach einem der vorhergehenden Ansprüche, wobei die Segmente (14) eine ringförmige Struktur bilden, wobei die Struktur zwei Segmente hat, die paarweise aneinander befestigt sind, vorzugsweise drei Segmente, die paarweise aneinander befestigt sind, vorzugsweise vier Segmente, die paarweise aneinander befestigt sind.

11. Vorrichtung (10) nach einem der vorhergehenden Ansprüche, wobei mindestens einige der Segmente (14) identische Module sind.

12. Erkennungssystem (11), umfassend einen optischen Sensor (12) eines Fahrzeugs und eine Reinigungsvorrichtung (10) nach einem der vorhergehenden Ansprüche, wobei die Vorrichtung so konfiguriert ist, dass sie die optische Oberfläche (13) des optischen Sensors reinigt.

13. System (11) nach dem vorhergehenden Anspruch, wobei der optische Sensor (12) eine zylindrische optische Oberfläche (13) aufweist, wobei die Segmente (14) eine ringförmige Struktur auf mindestens einem Teil des Umfangs der optischen Oberfläche bilden.

## Claims

1. Device (10) for cleaning an optical surface (13) of an optical sensor (12) of a vehicle, the device comprising:
- a first segment (14) with a first cleaning fluid circulation channel (16) and a first connector (22),
- a second segment (14) with a second cleaning fluid circulation channel (16) and a second connector (22),
- the first and second segments (14) each comprising a cleaning fluid inlet (18) and at least one nozzle (20) for diffusing the cleaning fluid towards the optical surface,
- the first segment and the second segment (14) being configured to be fixed to each other so as to form an arc of a circle defining an axial direction (Z) passing through the center of the arc of the circle and a radial direction (Y) along a radius of the arc of the circle, **characterized in that**
- the first connector (22) and second connector (22) are of complementary shape, and are configured to cooperate so as to allow locking of the first and second segments relative to each other along the axial direction (Z) and along the radial direction (Y).

2. Device (10) according to the preceding claim, wherein the connectors (22) of segments fixed to each other form a removable elastic fitting.

3. Device (10) according to one of claims 1 or 2, wherein the connectors (22) comprise a protrusion (26) on one of the segments and a bore (28) in another segment, the fitting of the protrusion (26) into the bore (28) blocking the segments in translation relative to each other along the radial direction (Y) and a tangential direction (X), which is orthogonal to the radial (Y) and axial (Z) directions.

4. Device (10) according to claim 3, wherein the protrusion (26) is elastically fittable into the bore (28), the elastic fitting of the protrusion (26) with the bore (28) blocking the segments in translation relative to each other along the axial direction (Z).

5. Device (10) according to claims 3 or 4, wherein the connectors further comprise studs (36) and/or lugs (38) on at least one of the segments (14) cooperating with the other segment and blocking the segments in rotation relative to each other around the axial direction (Z).

6. Device (10) according to claim 3, wherein the connectors (22) comprise tabs (42) on at least one of the segments engaging with the other segment and blocking the segments (14) in translation relative to each other along the axial direction (Z).

7. Device (10) according to claim 6, wherein the connectors further comprise:
- Lugs (38) on at least one of the segments engaging with the other segment and blocking the segments in rotation relative to each other around the axial direction (Z), and/or
- A pin (46) on at least one of the segments and an aperture (48) in the other segment, the fitting of the pin into the aperture and the elastic fitting of the protrusion (26) with the bore (28) blocking the segments in rotation relative to each other around the axial direction (Z).

8. Device (10) according to one of claims 1 or 2, wherein the connector (22) of one of the segments (14) comprises a tab (50) fitting into a housing (52) of the other connector (22) of the other segment (14), the elastic fitting of the tab (50) into the housing (52) blocking the segments in translation relative to each other along the tangential (X), radial (Y) and axial (Z) directions and around the axial direction (Z).

9. Device (10) according to one of the preceding claims, comprising a passage (24) for a fastening element of the cleaning device (10) to a sensor support (12), the passage (24) being through the connectors (22).

10. Device (10) according to one of the preceding claims, wherein the segments (14) form an annular structure, the structure having two segments fixed to each other two by two, preferably having three segments fixed to each other two by two, preferably having four segments fixed to each other two by two.

11. Device (10) according to one of the preceding claims, wherein at least some of the segments (14) are identical modules.

12. Detection system (11) comprising an optical sensor (12) of a vehicle and a cleaning device (10) according to one of the preceding claims, the device being configured to clean the optical surface (13) of the optical sensor.

13. System (11) according to the preceding claim, wherein the optical sensor (12) has a cylindrical optical surface (13), the segments (14) forming an annular structure on at least a part of the circumference of the optical surface.
